(19) Europäisches Patentamt
European Patent Office
Office européen des brevets

(11) EP 2 197 954 B1

(12) **EUROPEAN PATENT SPECIFICATION**

(45) Date of publication and mention of the grant of the patent:
**16.01.2013 Bulletin 2013/03**

(21) Application number: **08833019.6**

(22) Date of filing: **10.09.2008**

(51) Int Cl.:
***C08L 63/00*** *(2006.01)* ***C08G 59/30*** *(2006.01)*

(86) International application number:
**PCT/JP2008/066806**

(87) International publication number:
**WO 2009/041333 (02.04.2009 Gazette 2009/14)**

(54) **CURABLE LIQUID EPOXY RESIN COMPOSITION AND CURED PRODUCT THEREOF**

HÄRTBARE FLÜSSIGE EPOXIDHARZZUSAMMENSETZUNG UND GEHÄRTETES PRODUKT DAVON

COMPOSITION DE RÉSINE ÉPOXY LIQUIDE DURCISSABLE ET PRODUIT DURCI DE CELLE-CI

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **28.09.2007 JP 2007253228**

(43) Date of publication of application:
**23.06.2010 Bulletin 2010/25**

(73) Proprietor: **Dow Corning Toray Co., Ltd.**
**Tokyo, 100-0004 (JP)**

(72) Inventors:
- **MORITA, Yoshitsugu**
  **Ichihara-shi**
  **Chiba 299-0108 (JP)**
- **UEKI, Hiroshi**
  **Ichihara-shi**
  **Chiba 299-0108 (JP)**

(74) Representative: **Gillard, Richard Edward**
**Elkington and Fife LLP**
**Thavies Inn House**
**3-4 Holborn Circus**
**London EC1N 2HA (GB)**

(56) References cited:
**EP-A- 0 789 057**
**EP-A- 1 408 083**
**WO-A-2006/038638**
**WO-A-2008/078662**
**WO-A-2008/078663**
**US-A- 5 102 960**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 197 954 B1

## Description

Technical Field

The invention relates to a curable liquid epoxy resin composition and to a cured product obtained from the composition.

Background Art

Curable epoxy resin compositions possess excellent electrical and adhesive properties and therefore such compositions find application in electrical and electronic devices as sealants, adhesives, or the like. Since curable liquid epoxy resin compositions comprising liquid epoxy resins and acid anhydrides are characterized by long pot life and reduced amount of generated heat, these compositions find applications as potting agents. In general, however, cured products obtained from the curable epoxy resin compositions have high modulus of elasticity and rigidity. Therefore, when these products expand under the effect of heating or shrink under the effect of curing, they can easily develop stress in electrical and electronic devices. It was proposed to reduce the modulus of elasticity of the aforementioned cured product by mixing the curable epoxy resin composition with silicone (see Japanese Unexamined Patent Application Publications H08-217857 and 2002-80562).

However, the curable liquid epoxy compositions obtained by the aforementioned method either do not possess sufficient adhesiveness, or do not provide sufficient decrease of modulus of elasticity in the cured product.

EP 0 789 057 discloses a curable epoxy resin composition comprising (A) a curable epoxy resin and (B) an organopolysiloxane prepared by equilibrium polymerisation and having the average unit formula $(R^1SiO_{3/2})_a(R^2{}_2SiO_{2/2})_b$ $(R^2{}_3SiO_{1/2})_c(R^3O_{1/2})_d$ in which $R^1$ is an epoxy-functional monovalent organic group, $R^2$ is a monovalent hydrocarbon group, $R^3$ is a hydrogen atom or an alkyl group having no more than four carbon atoms, a>0, b>0, d>0 and c≥0. An electronic component coated with a product obtained by curing the aforesaid composition is also disclosed.

US 5,102,960 discloses a silicone-epoxy resin composition comprising (A) 100 parts by weight of a curable epoxy resin; (B) 1-100 parts by weight of an epoxy resin-modified silicone resin obtained by a condensation reaction of 1-99 mole % of an epoxy resin having at least one hydroxyl group and at least one epoxy group and 1-99 mole % of an organosiloxane or organosilane compound represented by the general formula

$$[R_n{}^1Si(OR^2)_mO_{\frac{4-(m-n)}{2}}]_l$$

wherein $R^1$ represents a monvalent hydrocarbon group or a halogenated monovalent hydrocarbon group, $R^2$ represents a hydrogen atom or a monovalent aliphatic hydrocarbon group, 1 is a number ranging from 1 to 1,500, n is a number ranging from 0.9 to 3, and m is a number ranging from 0.05 to 3.1 with a proviso that the sum of m+n is not greater than 4; and (C) 1-100 parts by weight of an epoxy-modified polysiloxane having an epoxy equivalent ranging from 1,000 to 20,000, represented by the general formula

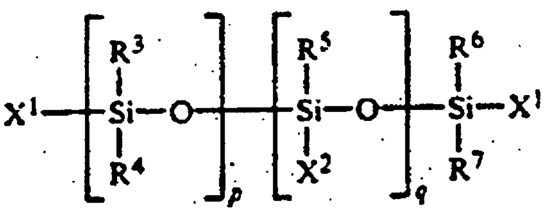

wherein $R^3$, $R^4$, $R^5$, $R^6$ and $R^7$ may be the same or different, each represents a lower alkyl group or a substituted or unsubstituted phenyl group, $X^1$ represents a monovalent aliphatic hydrocarbon group or an epoxy-containing organic group, $X^2$ represents an epoxy-containing organic group p is an integer of 1 to 500, and q is an integer of 0 to 100.

It is an object of the present invention to provide a curable liquid epoxy resin composition that possesses excellent handleability, and which, when cured, forms a cured product that acquires low modulus of elasticity in combination with excellent adhesive properties. It is another object to provide a cured product with the above-described properties.

Disclosure of Invention

A curable liquid epoxy resin composition of the invention comprises:

(I) 100 parts by weight of a liquid epoxy resin;
(II) 0.1 to 500 parts by weight of an acid anhydride;
(III) a diorganosiloxane represented by the following general formula:

$$A\text{-}R^2\text{-}(R^1{}_2SiO)_nR^1{}_2\ Si\text{-}R^2\text{-}A$$

{where $R^1$ designates identical or different, substituted or unsubstituted univalent hydrocarbon groups, which are free of aliphatic unsaturated bonds; $R^2$ designates bivalent organic groups; "A" represents a siloxane residue radical expressed by the following average unit formula:

$$(XR^1{}_2SiO_{1/2})_a\ (SiO_{4/2})_b$$

(where $R^1$ is the same as defined above, X designates a single bond, a hydrogen atom, a group designated by $R^1$, an epoxy-containing alkyl group, or an alkoxysilylalkyl group; however, in one molecule at least one X should be represented by a single bond wherein the single bond is used for bonding siloxane residue radical "A" to the group $R^2$, and at least two groups designated by X should be represented by epoxy-containing alkyl groups; "a" is a positive number; "b" is a positive number; and a/b is a number ranging from 0.2 to 4); and "n" is an integer equal to or greater than 1} (in the amount of 0.1 to 100 parts by weight per 100 parts by weight of the sum of components (I) and (II)}; and
(IV) an inorganic filler (in the amount of at least 20 wt.% of the composition).

The cured product of the invention is characterized by being obtained by curing the aforementioned composition.

Effects of Invention

The curable liquid epoxy resin composition of the invention possesses excellent handleability, and when cured, forms a cured product that is characterized by low modulus of elasticity in combination with excellent adhesive properties. The cured product of the composition is characterized by low modulus of elasticity in combination with excellent adhesiveness.

Detailed Description of the Invention

The liquid epoxy resin that constitutes component (I) is the main component of the composition. There are no special restriction with regard to this component provided that its molecule contains at least one epoxy group and that it is liquid at room temperature. It is recommend that the viscosity of component (1) at 25°C does not exceed 800 Pa·s, preferably not exceed 500 Pa·s, and most preferably not exceed 100 Pa·s. Aforementioned component (I) can be exemplified by a bisphenol-A type epoxy resin, bisphenol-F type epoxy resin, bisphenol-AD type epoxy resin, bisphenol-S type epoxy resin, hydrogenated bisphenol-A type epoxy resin, or a similar bisphenol-type epoxy resin; a naphthalene-type epoxy resin; a phenol-novolac-type epoxy resin; a biphenyl-type epoxy resin; a glycidylamine-type epoxy resin; an alicyclic-type epoxy resin; or a dicyclopentadiene-type epoxy resin. These epoxy resins can be used in combinations of two or more. Of these resins, most preferable from the viewpoint of resistance to heat and humidity are the bisphenol-A type epoxy resin, the bisphenol-F type epoxy resin, the bisphenol-AD type epoxy resin, the naphthalene-type epoxy resin, and the glycidylamine-type epoxy resin.

Component (II) is an acid anhydride that is used for a reaction with epoxy groups of component (I) and, hence, for curing the composition. There are no special restrictions with regard to the state of component (II) at 25°C, and this component may be in a liquid or in a solid state, but from the viewpoint of ease of handling the liquid state is preferable. When component (II) is liquid at 25°C, it is recommended that the viscosity thereof be in the range of 1 to 1,000,000 mPa·s, preferably in the range of 10 to 5,000 mPa·s, and most preferably in the range of 10 to 1,000 mPa·s. This is because viscosity below the recommended lower limit may decrease mechanical strength of a cured product obtained from the composition. On the other hand, if viscosity exceeds the recommended upper limit, this will impair handleability and workability of the composition.

Component (II) can be exemplified by succinic anhydride, maleic anhydride, itaconic anhydride, octenyl succinic anhydride, dodecenylsuccinic anhydride, phthalic anhydride, tetrahydrophthalic anhydride, hexahydrophthalic anhydride, methyl tetrahydrophthalic anhydride, methyl hexahydrophthalic anhydride, tetrabromophthalic anhydride, methyl himic anhydride (known as 5-norbornene-2,3-dicarboxylic anhydride), methyl nadic anhydride (known as methyl-5-norbornene-2,3-dicarboxylic anhydride), dodecyl succinic anhydride, chlorendic anhydride, trialkyl tetrahydrophthalic anhydride, diphenic anhydride, or a similar monofunctional anhydride; pyromellitic anhydride, benzophenone tetracarboxylic anhydride, ethyleneglycol bis(anhydrotrimate), methyl cyclohexene tetracarboxylic anhydride (known as 5-(2,5-dioxotetrahydro-3-furanyl)-3-methyl-3-cyclohexene-1,2-dicarboxylic anhydride), biphenyl tetracarboxylic anhydride, diphenyl ether tetracarboxylic anhydride, butane tetracarboxylic dianhydride, cyclopentane tetracarboxylic anhydride, benzophenone tetracarboxylic anhydride, bicyclo [2.2.2] oct-7-ene-2,3,5,6-tetracarboxylic anhydride, or a similar bifunctional anhydride; $\beta,\gamma$-aconitic anhydride, glycolic anhydride, trimellitic anhydride, polyazelaic anhydride, or a similar anhydride having free acid. These anhydrides can be used separately or in combinations of two or more. Most preferable for use as component (II) are anhydrides which are liquid at room temperature and easily miscible with the composition, such as methyl tetrahydrophthalic anhydride, methyl hexahydrophthalic anhydride, methyl nadic anhydride, trialkyl tetrahydrophthalic anhydride, dodecenyl succinic anhydride, or combinations of two or more of the aforementioned anhydrides.

Component (II) is added to the composition in the amount of 0.1 to 500 parts by weight, preferably 0.1 to 200 parts by weight, and most preferably 0.1 to 150 parts by weight per 100 parts by weight of component (I). In terms of acid anhydride groups, it is recommended that acid anhydride groups contained in component (II) be in the range of 0.2 to 5 moles, preferably 0.3 to 2.5 moles, and most preferably 0.8 to 1.5 moles per 1 mole of epoxy groups contained in component (I). This is because the presence of acid anhydride groups in an amount less than the recommended lower limit per one mole of epoxy groups of component (I) will hinder curing of the obtained composition, while presence of the acid anhydride groups in the amount exceeding the recommended upper limit will impair mechanical strength of a cured product obtained from the composition.

Component (III) is a diorganosiloxane represented by the following general formula:

$$A\text{-}R^2\text{-}(R^1{}_2SiO)_nR^1{}_2\ Si\text{-}R^2\text{-}A.$$

This component is used for improving moldablity of the composition, for improving adhesive properties of a cured product, and for reducing modulus of elasticity of the latter. In the above formula, $R^1$ designates identical or different, substituted or unsubstituted univalent hydrocarbon groups, which are free of aliphatic unsaturated bonds. Such groups can be represented by methyl, ethyl, propyl, butyl, pentyl, hexyl, octyl, decyl, octadecyl, or similar alkyl groups; cyclopentyl, cyclohexyl, cycloheptyl, or similar cycloalkyl groups; phenyl, tolyl, xylyl, or similar aryl groups; benzyl, phenethyl, phenylpropyl, or similar aralkyl groups; 3-chloropropyl, 3,3,3-trifluoropropyl, or similar halogenated alkyl groups. Most preferable are alkyl groups, especially methyl groups. In the above formula, $R^2$ designates bivalent organic groups such as ethylene, methylethylene, propylene, butylene, pentylene, hexylene, or similar alkylene groups; or ethyleneoxyethylene, ethyleneoxypropylene, ethylenoxybutylene, propyleneoxypropylene, or similar alkylenoxyalkylene groups. Most preferable are alkylene groups, especially ethylene groups. In the above formula, "n" is an integer equal to or greater than 1, which designates a degree of polymerization of the diorganosiloxane that forms the main chain. For improved flexibility of the cured product, it is recommended that "n" be an integer equal to or grater than 10. There are no restrictions with regard to the upper limit of "n" but it is recommended that "n" do not exceed 500.

In the above formula, "A" represents a siloxane residue radical expressed by the following average unit formula:

$$(XR^1{}_2SiO_{1/2})_a\ (SiO_{4/2})_b$$

In this formula, $R^1$ designates identical or different, substituted or unsubstituted univalent hydrocarbon groups that can be exemplified by the same groups as mentioned above, most preferable of which are alkyl groups, especially methyl groups. In the formula, X designates a single bond, a hydrogen atom, a group designated by $R^1$, an epoxy-containing alkyl group, or an alkoxysilylalkyl group. However, in one molecule at least one X should be represented by a single bond. This single bond is used for bonding to the group designated by $R^2$ and contained in the aforementioned diorganosiloxane. In one molecule, at least two groups designated by X should have epoxy-containing alkyl groups.

The groups designated by $R^1$ are exemplified by the same groups as mentioned above. In one molecule, at least one group designated by X should be a univalent hydrocarbon group having 6 or more carbon atoms. Component (III) should have good affinity for components (I) and (II) and is intended for improving flowability of the composition. Aforementioned univalent hydrocarbon groups can be exemplified by hexyl, octyl, decyl, octadecyl, or similar alkyl groups; cyclohexyl, cycloheptyl, or similar cycloalkyl groups; phenyl, tolyl, xylyl, or similar aryl groups; benzyl, phenethyl, phenylpropyl, or similar aralkyl groups. The alkyl groups are preferable.

The epoxy-containing alkyl groups can be exemplified by 2-glycidoxyethyl, 3-glycidoxypropyl, 4-glycidoxybutyl, or similar glycidoxyalkyl groups; 2-(3,4-epoxycyclohexyl) ethyl, 3-(3,4-epoxycyclohexyl) propyl, or similar 3,4-epoxycyclohexylalkyl groups; 4-oxiranylbutyl, 8-oxiranyloctyl, or similar oxiranylalkyl groups. Most preferable are glycidoxyalkyl groups, especially 3-glycidoxypropyl groups.

The alkoxysilylalkyl groups can be exemplified by trimethoxysilylethyl, trimethoxysilylpropyl, dimethoxymethylsilylpropyl, methoxydimethylsilylpropyl, triethoxysilylethyl, or tripropoxysilylpropyl groups. It is recommended that in the above formula at least one X correspond to an alkoxysilylalkyl group, especially a trimethoxysilylethyl group.

In the above formula, "a" is a positive number; "b" is a positive number; and a/b is a number ranging from 0.2 to 4.

Although there are special restrictions with regard to the weight-average molecular weight of component (III), it is recommended that this property be in the range of 500 to 1,000,000. Furthermore, although there are no special restrictions with regard to the state of component (III), it is recommended that this component be liquid at 25°C. Component (III) has viscosity that at 25°C ranges from 50 to 1,000,000 mPa·s. Method of manufacturing component (III) is described, e.g., in Japanese Unexamined Patent Application Publication H06-56999.

Component (III) can be added to the composition of the invention in an amount of 0.1 to 100 parts by weight, preferably 0.1 to 50 parts by weight, and most preferably 0.1 to 20 parts by weight per 100 parts by weight of the sum of the weights of components (1) and (II). If component (III) is contained in the amount less than the recommended lower limit, a cured product of the composition will have too high modulus of elasticity. If, on the other hand, the added amount of component (III) exceeds the recommended upper limit, a cured product will become too hard.

The inorganic filler that constitutes component (IV) is used for imparting strength to a cured product of the composition. Normally, addition of an inorganic filler to a curable liquid epoxy resin composition improves the strength of a cured product obtained from the composition. However, the composition becomes less flowable, and the modulus of elasticity of a cured body is increased. In the case of the composition of the invention, however, a combined use of components (III) and (IV) prevents decrease of flowability and impairment of moldablity, and allows obtaining of a cured product of high strength irrespective of low modulus of elasticity (low stress).

There are no special restrictions with regard to component (IV), provided that it is a conventional inorganic filler that can be compounded with the curable liquid epoxy resin composition. Examples of such a filler are the following: glass fiber, asbestos, alumina fiber, ceramic fiber consisting of alumina and silica, boron fiber, zirconia fiber, silicon carbide fiber, metal fiber, or a similar fibrous filler; amorphous silica, crystalline silica, precipitated silica, fumed silica, baked silica, zinc oxide, baked clay, carbon black, glass beads, alumina, talc, calcium carbonate, clay, aluminum hydroxide, magnesium hydroxide, barium sulfate, titanium dioxide, aluminum nitride, boron nitride, silicon carbonate, aluminum oxide, magnesium oxide, titanium oxide, beryllium oxide, kaolin, mica, zirconia, or a similar powdered filler. The aforementioned fillers may be used in a combination of two or more. There are no special restrictions with regard to the shape of the particles in component (IV), and the particles may be spherical, needle-shaped, flat, crushed (irregular), etc. However, from the point of view of improved moldability, it is recommended to choose the spherical particles. Most preferable is spherical amorphous silica. Although there are no special restrictions with respect to the particle size, from the viewpoint of improved moldability, the average particle size should be within the range of 0.1 to 50 μm. Inorganic filler materials having different average particle sizes can be used in combinations of two or more,

In order to improve affinity to component (I), component (IV) can be subjected to preliminary surface treatment with a silane coupling agent, titanate coupling agent, or a similar coupling agent, The silane coupling agent can be exemplified by 3-glycidoxypropyl trimethoxysilane, 3-glycidoxypropyl methyldiethoxysilane, 2-(3,4-epoxycyclohexyl) ethyl trimethoxysilane, or a similar epoxy-containing alkoxysilane; N-(2-aminoethyl)-3-aminopropyl trimethoxysilane, 3-aminopropyl triethoxysilane, N-phenyl-3-aminopropyl trimethoxysilane, or a similar amino-containing alkoxysilane; 3-mercaptopropyl trimethoxysilane, or a similar mercapto-containing alkoxysilane, as well as 3-isocyanatepropyl triethoxysilane, or 3-ureidopropyl triethoxysilane. The titanate coupling agent can be represented by i-propoxytitanium tri(i-isostearate). These coupling agents can be used in combination of two or more. There are no restrictions with regard to surface-coating processes and amounts in which the coupling agents can be used in such processes.

Component (IV) should be added to the composition of the invention in the amount of at least 20 wt.%, preferably at least 30 wt.%, more preferable at least 50 wt.%, and most preferably at least 80 wt.% of the composition. If this component is added in the amount less than the recommended lower limit, a cured product of the composition will not obtain sufficient strength.

Component (IV) can be added to the composition by dispersing it in component (I) or in component (II). In order to improve affinity of component (IV) to components (I) and (II), component (IV) may contain a silane coupling agent, a titanate coupling agent, or a similar coupling. The coupling may be the same as mentioned earlier.

In order to accelerate curing, the composition may incorporate (V) a curing accelerator. Component (V) can be exemplified by triphenylphosphine, tributylphosphine, tri(p-methylphenyl) phosphine, tri (nonylphenyl) phosphine, triphenylphosphine-triphenyl borate, tetraphenylphosphine-tetraphenyl borate, and other phosphorus compounds; triethylamine, benzyldimethylamine, α-methylbenzyldimethylamine, 1,8-diazabicyclo [5.4.0]undecene-7, and other tertiary amine compounds; 2-methylimidazole, 2-phenylimidazole, 2-phenyl-4-methylimidazole, and other imidazole compounds. These compounds can be used in combination of two or more.

There are no special restrictions with regard to the amount in which component (V) can be added to the composition, but in general, the added amount ranges from 0.001 to 20 parts by weight per 100 parts by weight of component (I). If component (V) is added in the amount below the recommended lower limit, it will be difficult to accelerate a reaction between components (I) and (II). If, on the other hand, the added amount exceed the recommended upper

limit, this will impair strength of a cured product obtained from the composition.

If necessary, the composition may incorporate other additives such as thermoplastic resins, thermoplastic elastomers, organic synthetic rubbers, silicones, or similar stress-reducing agents; carnauba wax, higher fatty acids, synthetic waxes, or other waxes; carbon black or other coloring agents; halogen traps, etc.

There are no limitations concerning the methods used for preparing the composition of the invention. Thus, it can be prepared by uniformly mixing components (I) to (IV), if necessary, with other optional components. The dispersibility of component (III) can be improved if component (III) is mixed with components (I) and (II) premixed in advance. Alternatively, components (II), (III), and other optional components can be added to components (I) and (IV) premixed in advance. In this case, an integral blend can be prepared by adding a coupling agent to components (I) and (IV), or the component (I) can be added to component (IV) after surface treatment of the latter with the coupling agent. The equipment used to prepare the composition is exemplified by single- or double-spindle continuous mixer, two roll mill, Ross mixer®, kneader-mixer, Henschel mixer®, etc.

There are no special restrictions with respect to the viscosity of the composition at 25°C, but preferably the viscosity should not exceed 1,000 Pa·s and more preferably should not exceed 500 Pa·s. There are no limitations also with regard to molding processes. It may be recommended that the composition be heated for 0.5 hour at 100 to 120°C and then thermally cured for 0.5 to 4 hours at a temperature of 150 to 175°C. This is because the initial curing helps to prevent formation of voids, while the final heating provides sufficient curing.

Examples

The curable liquid epoxy resin composition and cured product obtained from the composition will be further described in more detail with reference to practical examples. In these examples, the viscosity values correspond to 25°C. The following methods were used for measuring properties of the curable liquid epoxy resin composition and the cured product.

[Viscosity of the Curable Liquid Epoxy Resin Composition]

Viscosity of the curable liquid epoxy resin composition was measured by means of a Rheometer AR550 (the product of TA-Instruments Co.) with a parallel-plate of 20 mm for a geometry, a specimen thickness of 200 μm and at a shear rate of 10/sec.

[Composite Modulus of Elasticity of Cured Product]

The curable liquid epoxy resin composition is defoamed under a pressure of 70 mmHg and is poured into a 10 mm-wide, 50 mm-long, and 2 mm-deep cavity of a mold. The composition is then subjected to pressure curing for 60 min. at 130°C under pressure of 2.5 MPa. The product is then subjected to secondary heating for 2 hours in an oven at 150°C. As a result, a cured sample is obtained. The obtained sample is used for measuring a coefficient of composite elasticity with the use of an ARES-type viscoelastomer (a product of RHEOMETRIC Scientific Co., Inc.) with 0.05% twisting, 1 Hz frequency, and at a temperature of 30 °C.

[Adhesive Properties of Cured Product]

A testpiece was formed by applying a layer of a curable liquid epoxy resin composition (10 mm x 15 mm x 0.2 mm) onto an aluminum plate (75 mm x 25 mm x 1 mm) by using Teflon® spacers and then curing the composition for 1 hour at 150°C. A similar testpiece was produced by using a nickel plate. Adhesive properties were measured for both testpieces in terms of peeling resistance strength ($kgf/cm^2$) with the use of the measurement apparatus Tensilon (Model-SS-100KP; the product of Orientec Co., Ltd.) at 20°C and at a peeling rate of 1 mm/min.

[Practical Example 1]

A curable liquid epoxy resin composition was prepared by mixing the following components: 35.6 parts by weight of a bisphenol-F type epoxy resin having viscosity of 2.4 Pa·s (Epikote 806; the product of Japan Epoxy Resin Co., Ltd.; epoxy equivalent = 168); 32.1 parts by weight of a methyl hexahydrophthalic anhydride having viscosity of 80 mPa·s (HN-5500; the product of Hitachi Chemical Co., Ltd.; acid anhydride equivalent = 168); 29.7 parts by weight of a spherical fused silica having an average particle size of 5 am (ADMAFINE; the product of Admatechs Co., Ltd.); 1.8 parts by weight of a mixture of a bisphenol-F epoxy resin with a bisphenol-A type epoxy resin having a 35 wt. % microcapsule type amine catalyst (HX-3941HP; the product of Asahi Kasei Corp.); 0.7 parts by weight of 3-glycidoxypropyl trimethoxysilane; and 1.3 parts by weight of a dimethylpolysiloxane having viscosity of 4,270 mPa·s and expressed by

the following formula:

$$A\text{-}CH_2CH_2\ (CH_3)_2\ SiO\ [(CH_3)_2\ SiO]_{52}\ Si(CH_3)_2\ CH_2CH_2\text{-}A$$

{where "A" is represented by the following average unit formula:

$$[X(CH_3)_2\ SiO_{1/2}]_{1.6}\ (SiO_{4/2})_{1.0},$$

(where X consists of a single bond and a 3-glycidoxypropyl group, at least one X is a single bond, and the remaining X's designate 3-glycidoxypropyl groups). Viscosity of the obtained curable liquid epoxy composition as well as the composite modulus of elasticity and adhesive properties of a cured product are shown in Table 1.

[Practical Example 2]

A curable liquid epoxy resin composition was prepared by mixing the following components: 17.89 parts by weight of a bisphenol-F type epoxy resin having viscosity of 2.4 Pa·s (Epikote 806; the product of Japan Epoxy Resin Co., Ltd.; epoxy equivalent = 168); 16.11 parts by weight of a methyl hexahydrophthalic anhydride having viscosity of 80 mPa·s (HN-5500; the product of Hitachi Chemical Co., Ltd.; acid anhydride equivalent = 168); 64.74 parts by weight of a spherical fused silica having an average particle size of 5 μm (ADMAFINE; the product of Admatechs Co., Ltd.); 0.91 parts by weight of a mixture of a bisphenol-F type epoxy resin with a bisphenol-A type epoxy resin having a 35 wt. % microcapsule type amine catalyst (HX-3941HP; the product of Asahi Kasei Corp.); 0.35 parts by weight of 3-glycidoxypropyl trimethoxysilane; and 1.9 parts by weight of a dimethylpolysiloxane having viscosity of 4,270 mPa·s and expressed by the following formula:

$$A\text{-}CH_2CH_2\ (CH_3)_2\ SiO\ [(CH_3)_2\ SiO]_{52}\ Si(CH_3)_2\ CH_2CH_2\text{-}A$$

{where "A" is represented by the following average unit formula:

$$[X(CH_3)_2\ SiO_{1/2}]_{1.6}\ (SiO_{4/2})_{1.0},$$

(where X consists of a single bond and a 3-glycidoxypropyl group, at least one X is a single bond, and the remaining X's designate 3-glycidoxypropyl groups). Viscosity of the obtained curable liquid epoxy composition as well as the composite modulus of elasticity and adhesive properties of a cured product are shown in Table 1.

[Practical Example 3]

A curable liquid epoxy resin composition was prepared by mixing the following components: 35.6 parts by weight of a bisphenol-F type epoxy resin having viscosity of 2.4 Pa·s (Epikote 806; the product of Japan Epoxy Resin Co., Ltd.; epoxy equivalent = 168); 32.1 parts by weight of a methyl hexahydrophthalic anhydride having viscosity of 80 mPa·s (HN-5500; the product of Hitachi Chemical Co., Ltd.; acid anhydride equivalent = 168); 29.7 parts by weight of a spherical fused silica having an average particle size of 5 μm (ADMAFINE; the product of Admatechs Co., Ltd.); 1.8 parts by weight of a mixture of a bisphenol-F type epoxy resin with a bisphenol-A type epoxy resin having a 35 wt. % microcapsule type amine catalyst (HX-3941HP; the product of Asahi Kasei Corp.); 0.7 parts by weight of 3-glycidoxypropyl trimethoxysilane; and 1.3 parts by weight of a dimethylpolysiloxane having viscosity of 12,000 mPa·s and expressed by the following formula:

$$A\text{-}CH_2CH_2\ (CH_3)_2\ SiO\ [(CH_3)_2\ SiO]_{94}\ Si(CH_3)_2\ CH_2CH_2\text{-}A$$

{where "A" is represented by the following average unit formula:

$$[X(CH_3)_2\ SiO_{1/2}]_{1.3}\ [Y(CH_3)_2\ SiO_{1/2}]_{0.3}\ (SiO_{4/2})_{1.0},$$

(where X consists of a single bond and a 3-glycidoxypropyl group, at least one X is a single bond, the remaining X's designate 3-glycidoxypropyl groups, and Y is a trimethoxysilylpropyl group). Viscosity of the obtained curable liquid epoxy composition as well as the composite modulus of elasticity and adhesive properties of a cured product are shown in Table 1.

[Comparative Example 1]

A curable liquid epoxy resin composition was prepared by mixing the following components: 35.6 parts by weight of a bisphenol-F type epoxy resin having viscosity of 2.4 Pa·s (Epikote 806; the product of Japan Epoxy Resin Co., Ltd.; epoxy equivalent =168); 32.1 parts by weight of a methyl hexahydrophthalic anhydride having viscosity of 80 mPa·s (HN-5500; the product of Hitachi Chemical Co., Ltd.; acid anhydride equivalent =168); 29.7 parts by weight of a spherical fused silica having an average particle size of 5 μm (ADMAFINE; the product of Admatechs Co., Ltd.); 1.8 parts by weight of a mixture of a bisphenol-F type epoxy resin with a bisphenol-A type epoxy resin having a 35 wt. % microcapsule type amine catalyst (HX-3941HP; Asahi Kasei Corp.); and 0.7 parts by weight of 3-glycidoxypropyl trimethoxysilane. Viscosity of the obtained curable liquid epoxy composition as well as the composite modulus of elasticity and adhesive properties of a cured product are shown in Table 1.

[Comparative Example 2]

A curable liquid epoxy resin composition was prepared by mixing the following components: 17.89 parts by weight of a bisphenol-F type epoxy resin having viscosity of 2.4 Pa·s (Epikote 806; the product of Japan Epoxy Resin Co., Ltd.; epoxy .equivalent = 168); 16.11 parts by weight of a methyl hexahydrophthalic anhydride having viscosity of 80 mPa.s (HN-5500; the product of Hitachi Chemical Co., Ltd.; acid anhydride equivalent =168); 64.74 parts by weight of a spherical fused silica having an average particle size of 5 μm (ADMAFINE; the product of Admatechs Co., Ltd.); 0.91 parts by weight of a mixture of a bisphenol-F type epoxy resin with a bisphenol-A type epoxy resin having a 35 wt. % microcapsule type amine catalyst (HX-3941HP; the product of Asahi Kasei Corp.); and 0.35 parts by weight of 3-glycidoxypropyl trimethoxysilane. Viscosity of the obtained curable liquid epoxy composition as well as the composite modulus of elasticity and adhesive properties of a cured product are shown in Table 1.

[Comparative Example 3]

A curable liquid epoxy resin composition was prepared by mixing the following components: 35.6 parts by weight of a bisphenol-F type epoxy resin having viscosity of 2.4 Pa·s (Epikote 806; the product of Japan Epoxy Resin Co., Ltd.; epoxy equivalent = 168); 32.1 parts by weight of a methylhexahydrophthalic anhydride having viscosity of 80 mPa·s (HN-5500; the product of Hitachi Chemical Co., Ltd.; acid anhydride equivalent =168); 29.7 parts by weight of a spherical fused silica having an average particle size of 5 μm (ADMAFINE; the product of Admatechs Co., Ltd.); 1.8 parts by weight of a mixture of a bisphenol-F type epoxy resin with a bisphenol-A type epoxy resin having a 35 wt. % microcapsule type amine catalyst (HX-3941HP; the product of Asahi Kasei Corp.); 0.7 parts by weight of 3-glycidoxypropyl trimethoxysilane; and 1.3 parts by weight of a dimethylpolysiloxane having 3-glycidoxypropyl groups and polyether groups in the side molecular chains (SF8421EG; the product of Dow Corning Toray Co., Ltd.). Viscosity of the obtained curable liquid epoxy composition as well as the composite modulus of elasticity and adhesive properties of a cured product are shown in Table 1.

[Comparative Example 4]

A curable liquid epoxy resin composition was prepared by mixing the following components: 50.7 parts by weight of a bisphenol-F type epoxy resin having viscosity of 2.4 Pa·s (Epikote 806; the product of Japan Epoxy Resin Co., Ltd.; epoxy equivalent = 168); 45.7 parts by weight of a methyl hexahydrophthalic anhydride having viscosity of 80 mPa·s (HN-5500; the product of Hitachi Chemical Co., Ltd.; acid anhydride equivalent = 168); 2.6 parts by weight of a mixture of a bisphenol-F type epoxy resin with a bisphenol-A type epoxy resin having a 35 wt. % microcapsule type amine catalyst (HX-3941HP; the product of Asahi Kasei Corp.); and 1.0 part by weight of 3-glycidoxypropyl trimethoxysilane. Viscosity of the obtained curable liquid epoxy composition as well as the composite modulus of elasticity and adhesive properties of a cured product are shown in Table 1.

[Table 1]

| Examples | Practical Examples | | | Comparative Examples | | | |
|---|---|---|---|---|---|---|---|
| Properties | 1 | 2 | 3 | 1 | 2 | 3 | 4 |
| Viscosity (Pa·s) | 0.9 | 72 | 2.8 | 1.5 | 32 | 0.9 | 0.4 |
| Composite Modulus of Elasticity (MPa) | 1300 | 2200 | 1030 | 1600 | 3740 | 1500 | 1030 |

(continued)

| | | | | | | | |
|---|---|---|---|---|---|---|---|
| Adhesive Properties (kgf/an$^2$)<br>Aluminum plate<br>Nickel plate | 108<br>- | 88<br>132 | 122<br>130 | 58<br>- | 37<br>50 | 60<br>- | 27<br>- |

Industrial Applicability

Since the composition of the invention is characterized by good handleability and workability, it is suitable for injection molding, compression molding, potting, casting, pulverization, dropwise application, etc. When the composition is cured, it forms a cured product of low modulus of elasticity in combination with excellent adhesiveness. Therefore, such the composition can be used as a sealant for semiconductor devices, in particular for ball grid array and chip size packages known as area array type semiconductor packages.

## Claims

1. A curable liquid epoxy resin composition comprising:

   (I) 100 parts by weight of a liquid epoxy resin;
   (II) 0.1 to 500 parts by weight of an acid anhydride;
   (III) a diorganosiloxane represented by the following general formula:

   $$A\text{-}R^2\text{-}(R^1{}_2SiO)_nR^1{}_2\ Si\text{-}R^2\text{-}A$$

   {where $R^1$ designates identical or different, substituted or unsubstituted univalent hydrocarbon groups, which are free of aliphatic unsaturated bonds; $R^2$ designates bivalent organic groups; "A" represents a siloxane residue radical expressed by the following average unit formula:

   $$(XR^1{}_2SiO_{1/2})_a\ (SiO_{4/2})_b$$

   (where $R^1$ is the same as defined above, X designates a single bond, a hydrogen atom, a group designated by $R^1$, an epoxy-containing alkyl group, or an alkoxysilylalkyl group; however, in one molecule at least one X should be represented by a single bond wherein the single bond is used for bonding siloxane residue radical "A" to the group $R^2$, and at least two groups designated by X should be
   represented by epoxy-containing alkyl groups; "a" is a positive number; "b" is a positive number; and a/b is a number ranging from 0.2 to 4); and "n" is an integer equal to or greater than 1} (in the amount of 0.1 to 100 parts by weight per 100 parts by weight of the sum of components (I) and (II)}; and
   (IV) an inorganic filler (in the amount of at least 20 wt.% of the composition).

2. The curable liquid epoxy resin composition of Claim 1, wherein component (I) is represented by a bisphenol-type epoxy resin, naphthalene-type epoxy resin, phenol-novolac-type epoxy resin, biphenyl-type epoxy resin, glycidylamine-type epoxy resin, alicyclic epoxy resin, dicyclopentadiene-type epoxy resin, or the aforementioned resins in combination of two or more.

3. The curable liquid epoxy resin composition of Claim 1, wherein component (II) is represented by methyl tetrahydrophthalic anhydride, methyl hexahydrophthalic anhydride, methyl nadic anhydride, trialkyl tetrahydrophthalic anhydride, dodecyl succinic anhydride, or the aforementioned anhydrides in combination of two or more.

4. The curable liquid epoxy resin composition of Claim 1, wherein at least one group designated by X in component (III) is a univalent hydrocarbon group having six or more carbon atoms.

5. The curable liquid epoxy resin composition of Claim 1, wherein at least one group designated by X in component (III) is an alkoxysilylalkyl group.

6. The curable liquid epoxy resin composition of Claim 1, wherein component (IV) is a spherical inorganic filler.

7. The curable liquid epoxy resin composition of Claim 1, wherein component (IV) is a spherical amorphous silica.

8. The curable liquid epoxy resin composition of Claim 1, further comprising (V) a curing accelerator {in an amount of 0.001 to 20 parts by weight per 100 parts by weight of component (I)}.

9. The curable liquid epoxy resin composition according to any of Claims from 1 to 8, which is a sealing agent for semiconductor devices.

10. A cured product obtainable by curing the curable liquid epoxy resin composition according to any of Claims from 1 to 8.

**Patentansprüche**

1. Härtbare flüssige Epoxidharzzusammensetzung, die Folgendes umfasst:

(I) 100 Gewichtsteile eines flüssigen Epoxidharzes;
(II) 0,1 bis 500 Gewichtsteile eines Säureanhydrids;
(III) ein Diorganosiloxan, das durch die folgende allgemeine Formel dargestellt ist:

$$A\text{-}R^2\text{-}(R^1{}_2SiO)_nR^1{}_2Si\text{-}R^2\text{-}A$$

{worin $R^1$ gleiche oder unterschiedliche, substituierte oder unsubstituierte einwertige Kohlenwasserstoffgruppen bezeichnet, die keine aliphatischen ungesättigten Bindungen enthalten; $R^2$ zweiwertige organische Gruppen bezeichnet; "A" einen Siloxanrest darstellt, der durch die folgende durchschnittliche Einheitsformel wiedergegeben ist:

$$(XR^1{}_2SiO_{1/2})_a(SiO_{4/2})_bb$$

(worin $R^1$ das Gleiche wie vorstehend definiert ist, X eine Einfachbindung, ein Wasserstoffatom, eine durch $R^1$ bezeichnete Gruppe, eine Epoxid-enthaltende Alkylgruppe oder eine Alkoxysilylalkylgruppe bezeichnet; wobei jedoch in einem Molekül mindestens ein X durch eine Einfachbindung dargestellt werden sollte, worin die Einfachbindung zur Bindung des Siloxanrests "A" an die Gruppe $R^2$ genutzt wird, und mindestens zwei Gruppen, die durch X bezeichnet werden, durch Epoxid-enthaltende Alkylgruppen dargestellt werden sollten; "a" eine positive Zahl ist; "b" eine positive Zahl ist; und a/b eine Zahl im Bereich von 0,2 bis 4 ist); und "n" eine ganze Zahl von gleich oder größer als 1 ist}{in der Menge von 0,1 bis 100 Gewichtsteilen pro 100 Gewichtsteilen der Summe aus den Komponenten (I) und (II)}; und
(IV) einen anorganischen Füllstoff (in der Menge von mindestens 20 Gew.-% der Zusammensetzung).

2. Härtbare flüssige Epoxidharzzusammensetzung nach Anspruch 1, worin die Komponente (I) durch Folgende dargestellt wird: ein Bisphenol-Typ-Epoxidharz, Naphthalen-Typ-Epoxidharz, Phenol-Novolac-Typ-Epoxidharz, Biphenyl-Typ-Epoxidharz, Glycidylamin-Typ-Epoxidharz, alicyclischem Epoxidharz, Dicyclopentadien-Typ-Epoxidharz oder die vorstehend genannten Harze in Kombination von zwei oder mehr.

3. Härtbare flüssige Epoxidharzzusammensetzung nach Anspruch 1, worin die Komponente (II) durch Folgende dargestellt wird: Methyltetrahydrophthalsäureanhydrid, Methylhexahydrophthalsäureanhydrid, Methylnadicanhydrid, Trialkyltetrahydrophthalsäureanhydrid, Dodecylbernsteinsäureanhydrid oder die vorstehend genannten Anhydide in Kombination von zwei oder mehr.

4. Härtbare flüssige Epoxidharzzusammensetzung nach Anspruch 1, worin mindestens eine durch X bezeichnete Gruppe in Komponente (III) eine einwertige Kohlenwasserstoffgruppe mit sechs oder mehr Kohlenstoffatomen ist.

5. Härtbare flüssige Epoxidharzzusammensetzung nach Anspruch 1, worin mindestens eine durch X bezeichnete Gruppe in Komponente (III) eine Alkoxysilylalkylgruppe ist.

6. Härtbare flüssige Epoxidharzzusammensetzung nach Anspruch 1, worin die Komponente (IV) ein kugelförmiger anorganischer Füllstoff ist.

7. Härtbare flüssige Epoxidharzzusammensetzung nach Anspruch 1, worin die Komponente (IV) ein kugelförmiges

amorphes Siliciumdioxid ist.

**8.** Härtbare flüssige Epoxidharzzusammensetzung nach Anspruch 1, die weiter (V) einen Härtungsbeschleuniger {in einer Menge von 0,001 bis 20 Gewichtsteilen pro 100 Gewichtsteilen der Komponente (I)} umfasst.

**9.** Härtbare flüssige Epoxidharzzusammensetzung nach einem der Ansprüche 1 bis 8, die ein Dichtungsmittel für Halbleiterbauelemente ist.

**10.** Gehärtetes Produkt, das durch Härten der härtbaren flüssigen Epoxidharzzusammensetzung nach einem der Ansprüche 1 bis 8 erhalten werden kann.

**Revendications**

**1.** Composition de résine époxy liquide durcissable comprenant :

(I) 100 parties en poids d'une résine époxy liquide ;
(II) 0,1 à 500 parties en poids d'un anhydride acide ;
(III) un diorganosiloxane représenté par la formule générale suivante :

$$A\text{-}R^2\text{-}(R^1{}_2SiO)_nR^1{}_2Si\text{-}R^2\text{-}A$$

{dans laquelle $R^1$ désigne des groupes hydrocarbures univalents substitués ou non substitués, identiques ou différents, qui sont exempts de liaisons non saturées aliphatiques ; $R^2$ désigne des groupes organiques bivalents ; « A » représente un radical de résidu siloxane exprimé par la formule d'unités moyennes suivante :

$$(XR^1{}_2SiO_{1/2})_a(SiO_{4/2})_b$$

(dans laquelle $R^1$ est tel que défini ci-dessus, X désigne une liaison unique, un atome d'hydrogène, un groupe désigné par $R^1$, un groupe alkyle contenant de l'époxy, ou un groupe alkoxysilylalkyle ; toutefois, dans une molécule, au moins un X devrait être représenté par une liaison unique dans laquelle la liaison unique est utilisée pour lier le radical de résidu siloxane « A » au groupe $R^2$, et au moins deux groupes désignés par X devraient être représentés par des groupes alkyles contenant de l'époxy ; « a » est un nombre positif ; « b » est un nombre positif ; et a/b est un nombre allant de 0,2 à 4) ; et « n » est un entier égal ou supérieur à 1} {dans la quantité de 0,1 à 100 parties en poids pour 100 parties en poids de la somme des composants (I) et (II)} ; et
(IV) une charge minérale (dans la quantité d'au moins 20 % en poids de la composition).

**2.** Composition de résine époxy liquide durcissable selon la revendication 1, dans laquelle le composant (I) est représenté par une résine époxy de type bisphénol, une résine époxy de type naphtalène, une résine époxy de type phénol-novolaque, une résine époxy de type biphényle, une résine époxy de type glucidylamine, une résine époxy alicyclique, une résine époxy de type dicyclopentadiène, ou les résines susmentionnées dans une combinaison de deux ou plus.

**3.** Composition de résine époxy liquide durcissable selon la revendication 1, dans laquelle le composant (II) est représenté par un anhydride méthyl-tétrahydrophtalique, un anhydride méthyl-hexahydrophtalique, un anhydride méthyl-nadique, un anhydride trialkyl-tétrahydrophtalique, un anhydride dodécyl-succinique, ou les anhydrides susmentionnés dans une combinaison de deux ou plus.

**4.** Composition de résine époxy liquide durcissable selon la revendication 1, dans laquelle au moins un groupe désigné par X dans le composant (III) est un groupe hydrocarbure univalent possédant six atomes de carbone ou plus.

**5.** Composition de résine époxy liquide durcissable selon la revendication 1, dans laquelle au moins un groupe désigné par X dans le composant (III) est un groupe alkoxysilylalkyle.

**6.** Composition de résine époxy liquide durcissable selon la revendication 1, dans laquelle le composant (IV) est une charge minérale sphérique.

7. Composition de résine époxy liquide durcissable selon la revendication 1, dans laquelle le composant (IV) est de la silice amorphe sphérique.

8. Composition de résine époxy liquide durcissable selon la revendication 1, comprenant en outre (V) un accélérateur de durcissement {dans une quantité de 0,001 à 20 parties en poids pour 100 parties en poids de composant (I)}.

9. Composition de résine époxy liquide durcissable selon l'une quelconque des revendications 1 à 8, qui est un agent d'étanchéité pour des dispositifs à semi-conducteurs.

10. Produit durci pouvant être obtenu par durcissement de la composition de résine époxy liquide durcissable selon l'une quelconque des revendications 1 à 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H08217857 B
- JP 2002080562 A
- EP 0789057 A
- US 5102960 A
- JP H0656999 B